# EUROPEAN PATENT APPLICATION

(11) **EP 4 576 296 A1**
(43) Date of publication of application: **25.06.2025**
(21) Application number: 24222723.9
(22) Date of filing: 23.12.2024
(51) Int. Cl.: H01M 10/04, H01M 50/209, H01M 50/264, H01M 50/291

(54) **BATTERY MODULE AND BATTERY PACK**

(30) Priority: 22.12.2023 CN 202323529198 U; 30.08.2024 WO PCT/CN2024/115852
(71) Applicant: Eve Energy Co., Ltd., Huizhou, Guangdong 516006 (CN)
(72) Inventor: CHEN, Hesheng, Huizhou, Guangdong, 516006 (CN); ZHOU, Hongquan, Huizhou, Guangdong, 516006 (CN)
(74) Representative: Berggren Oy

(57) **Abstract**

The disclosure provides a battery module (10) and a battery pack (100). The battery module (10) includes a plurality of cells (3), two end plates (1), and at least one hold-down strip (2); the plurality of cells (3) are arranged sequentially in a first direction to form a cell group (4); the two end plates (1) abut against two ends of the cell group (4), respectively; and the hold-down strip (2) abuts against the cell group (4), the hold-down strip (2) includes a hold-down strip body (21) and a connecting component (22), the hold-down strip body (21) extends in the first direction, the connecting component (22) is connected to an end of the hold-down strip body (21) in the first direction, and the connecting component (22) movably abuts against a side of one of the two end plates (1) away from the cell group (4).

## Description

### TECHNICAL FIELD

The disclosure relates to the field of battery, and in particular, to a battery module and a battery pack.

### BACKGROUND

With the rapid development of the new energy vehicle market, the safety of power battery systems has always been the focus of the industry. The assembly technology of a battery module is an important direction in the integration design of a battery pack. Due to the constraint of end-side plates, or straps in the battery module, structural stability of the battery module is better than that of the battery pack using the cell to pack (CTP) technology.

### SUMMARY

In related art, the assembly of a battery module usually adopts a thick and heavy end-side plates scheme or a lightweight design, which leads to insufficient constraint on cells of the battery module, resulting in insufficient structural strength of the battery module in its entire life cycle, leading to irreversible expansion and deformation of the battery module, and affecting the cycle life of the battery module.

Embodiments of the disclosure provide a battery module. The battery module includes a plurality of cells, two end plates, and at least one hold-down strip; the plurality of cells are arranged sequentially in a first direction to form a cell group; the two end plates abut against two ends of the cell group, respectively; and the hold-down strip abuts against the cell group, the hold-down strip includes a hold-down strip body and a connecting component, the hold-down strip body extends in the first direction, the connecting component is connected to an end of the hold-down strip body in the first direction, and the connecting component movably abuts against a side of one of the two end plates away from the cell group.

Embodiments of the disclosure further provide a battery pack including the battery module as described above.

In the battery pack provided in the embodiments of the disclosure, the cells are arranged sequentially in the first direction to form the cell group, and the two end plates abutting against two ends of the cell group and the hold-down strip connected to the two end plates can form a cell frame for the cell group, so as to provide a constraint effect on the cell group in various directions. Moreover, since the hold-down strip movably abuts against the two end plates though the connecting component connected to an end of the hold-down strip body, and the connecting component movably abuts against the two end plates, the two end plates can be close to each other to clamp the cell group, which improves the binding force on the cell group in the first direction, further enhances the constraint effect of the hold-down strip and the two end plates on the cell group in the first direction, improves the anti-expansion performance of the battery module in various directions, and ensures the structural stability and reliability of the battery module in its entire life cycle.

By using the battery module as described above, the battery pack provided in the embodiments of the disclosure has excellent anti-expansion performance in various directions and better structural stability and reliability in its entire life cycle.

### BRIEF DESCRIPTION OF THE DRAWINGS

FIG. 1 is a schematic three-dimensional diagram of a battery module provided by some embodiments of the disclosure.
FIG. 2 is an exploded diagram of the battery module provided by some embodiments of the disclosure.
FIG. 3 is a schematic structural diagram of a hold-down strip provided by some embodiments of the disclosure.
FIG. 4 is an enlarged diagram at position A in FIG. 3.
FIG. 5 is a schematic structural diagram of an end plate provided by some embodiments of the disclosure.
FIG. 6 is a schematic structural diagram of a battery pack provided by some embodiments of the disclosure.

### Reference characters:

10, battery module; 1, end plate; 11, protrusion; 2, hold-down strip; 21, hold-down strip body; 211, first hold-down strip portion; 212, second hold-down strip portion; 22, connecting component; 221, preload member; 222, connecting portion; 2221, connecting hole; 3, cell; 4, cell group; 6, adhesive layer; 7, foam; and 100, battery pack.

### DETAILED DESCRIPTION

In the description of the disclosure, unless otherwise specified or limited, the terms "connected", "connection", and "fixed" should be understood broadly. For example, it can be a fixed connection, a detachable connection, or an integrated unit; alternatively, it can be a mechanical connection or an electrical connection; alternatively, it can be a direct connection or an indirect connection through an intermediate medium; and alternatively, it can be an internal connection of two components or an interaction relationship between two components. For an ordinary person skilled in the art, specific meanings of the above terms in the disclosure can be understood based on specific situations.

In the disclosure, unless otherwise specified or limited, "a first feature above or below a second feature" may include a direct contact between the first feature and the second feature, or an indirect contact through another feature between the first feature and the second feature, instead of the direct contact. Moreover, the first feature is disposed "on" or "above" the second feature, indicating that the first feature is directly above or diagonally above the second feature, or simply indicating that the first feature is horizontally higher than the second feature. The phrase "the first feature is disposed below or under the second feature" indicates that the first feature is directly below or diagonally below the second feature, or simply indicates that the first feature is horizontally lower than the second feature.

In the description of the disclosure, directional or positional relationships indicated by the terms "on", "above", "below", "left", "right", "front", "back", and the like, are based on the directional or positional relationships shown in the drawings, which are used only for the convenience of describing the disclosure and simplifying the description, rather than indicating or implying that the devices or elements must have a specific direction, be constructed or operated in a specific direction. Therefore, the terms cannot be interpreted as a limitation on the disclosure. In addition, the terms "first" and "second" are used only for the purpose of description and do not have specific meanings.

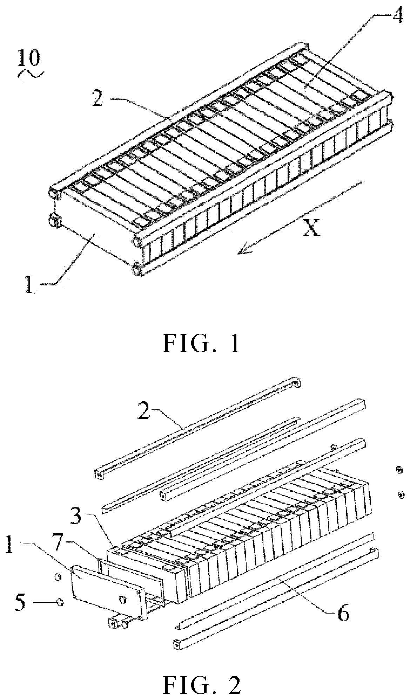

As illustrated in FIG. 1 and FIG. 2, some embodiments of the disclosure provide a battery module 10, which includes two end plates 1, at least one hold-down strip 2, and a plurality of cells 3. The plurality of cells 3 are arranged sequentially in a first direction X to form a cell group 4. The two end plates 1 abut against two ends of the cell group 4, respectively.

In some embodiments, a shape of each of the two end plates 1 can match a shape of each of the cells 3. For example, when the cells 3 are square cells, each of the two end plates 1 is square. Furthermore, a size of each of the two end plates 1 can also match a size of each of the cells 3. By disposing the size of each of the two end plates 1 matching the size of each of the cells 3, the constraint effect of the two end plates 1 on the cells 3 can be improved.

In some embodiments, the hold-down strip 2 abuts against the cell group 4. The hold-down strip 2 includes a hold-down strip body 21 and at least one connecting component 22, the hold-down strip body 21 extends in the first direction X, the connecting component 22 is connected to an end of the hold-down strip body 21 in the first direction X, and the connecting component 22 movably abuts against a side of one of the two end plates 1 away from the cell group 4.

The hold-down strip 2 may include one connecting component 22 or two connecting components 22. In some embodiments, the hold-down strip 2 includes one connecting component 22, an end of the hold-down strip body 21 in the first direction X is connected to a side of the one connecting component 22, and another end of the hold-down strip body 21 in the first direction X is fixedly connected to one of the two end plates 1; and another side of the one connecting component 22 is movably abuts against another of the two end plates 1. In some embodiments, the hold-down strip 2 includes two connecting components 22, the two connecting components 22 are connected to two opposite ends of the hold-down strip body 21 in the first direction X, respectively; and the two connecting components 22 movably abut against the two end plates 1, respectively.

In some embodiments, as illustrated in FIG. 1 and FIG. 2, the plurality of cells 3 are square cells, and the plurality of cells 3 are arranged sequentially in a thickness direction of the cells 3 (the first direction X) to form the cell group 4. The two end plates 1 abut against two ends of the cell group 4, respectively.

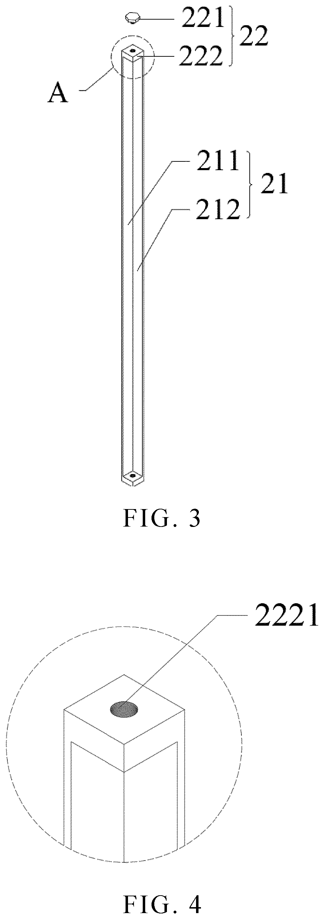

In some embodiments, as illustrated in FIG. 3, the hold-down strip 2 includes the hold-down strip body 21 and two connecting components 22. The hold-down strip body 21 extends in the first direction X, and the two connecting components 22 are connected to two ends of the hold-down strip body 21 in the first direction X. In some embodiments, the two connecting components 22 and the hold-down strip body 21 are integrally formed, and the two connecting components 22 are connected to two ends of the hold-down strip body 21, respectively.

The hold-down strip 2 abuts against the cell group 4, and each of the two connecting components 22 movably abuts against a side of one of the two end plates 1 away from the cell group 4. By disposing the hold-down strip 2 abutting against the cell group 4, and disposing the hold-down strip 2 movably abutting against the two end plates 1 through the two connecting components 22, the two end plates 1 and the hold-down strip 2 can form a cell frame for constraining the cell group 4, providing a constraint effect on the cell group 4 in various directions. Moreover, the two connecting components 22 located at two ends of the hold-down strip body 2 movably abut against the two end plates 1, respectively, so that the two end plates 1 are close to each other to clamp the cell group 4, which improves the binding force on the cell group 4 in the first direction X, further enhances the constraint effect of the hold-down strip 2 and the two end plates 1 on the cell group 4 in the first direction X, improves the anti-expansion performance of the battery module 10 in various directions, and ensures the structural stability and reliability of the battery module 10 in its entire life cycle.

It can be understood that a preload force is one of the important indicators in the design of the battery module, which has a great influence on the cycle life and initial stiffness of the battery module. However, in related art, the battery module usually adopts the design method of a fixed preload force, which cannot adjust an initial preload force of the battery module to match fluctuation of sizes of incoming materials.

In some embodiments, as illustrated in FIG. 3, each of the two connecting components 22 includes a preload member 221 and a connecting portion 222. The connecting portion 222 is connected to an end of the hold-down strip body 21. The preload member 221 is movably connected to the connecting portion 222 in the first direction X, and an end of the preload member 221 away from the connecting portion 222 abuts against one of the two end plates 1.

In the above embodiments, the hold-down strip body 21 is connected to the connecting portion 222 through the preload member 221 in the first direction X, and an end of the preload member 221 away from the connecting portion 222 abuts against the two end plates 1, so as to achieve the connection between the hold-down strip 2 and the two end plates 1. Moreover, the flexible adjustment of the preload force of the battery module 10 can be achieved by disposing the preload member 221, thereby solving the problem of an excessive or insufficient preload force that is prone to occur when there is fluctuation in sizes of incoming materials, and avoiding affecting the cycle life of the battery module 10 due to excessive or insufficient preload.

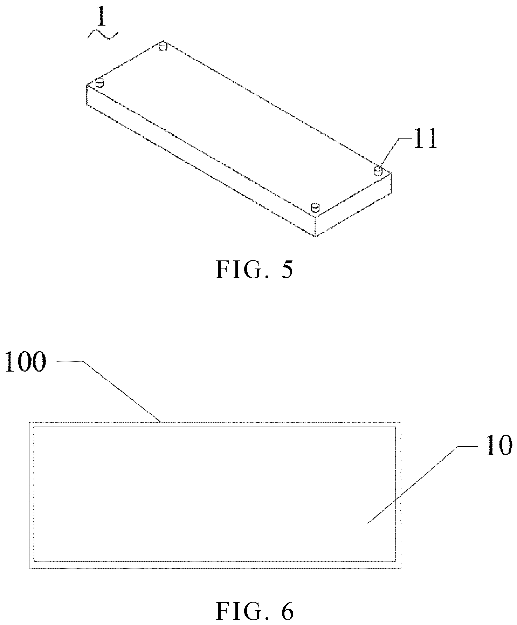

In some embodiments, as illustrated in FIG. 5, a protrusion 11 extending in the first direction X is provided on each of the two end plates 1, and an end of the protrusion 11 away from the two end plates 1 is inserted into the connecting portion 222.

In the above embodiments, the protrusion 11 is disposed on each of the two end plates 1, and an end of the protrusion 11 away from the two end plates 1 is inserted into the connecting portion 222, so that the protrusion 11 can provide a positioning effect for the two end plates 1 and the hold-down strip 2, thereby better achieving the connection between the two end plates 1 and the hold-down strip 2.

In some embodiments, the protrusion 11 can be in a cylindrical shape, a cubic column shape, or the like.

Furthermore, as illustrated in FIG. 3 and FIG. 4, the connecting portion 222 is provided with a connecting hole 2221, the protrusion 11 is inserted into a part of the connecting hole 2221, and the preload member 221 penetrates through another part of the connecting hole 2221 and abuts against the protrusion 11.

On the one hand, the protrusion 11 is inserted into the connecting hole 2221 to play a positioning effect. On the other hand, the preload member 221 abuts against the protrusion 11 in the connecting hole 2221, achieving the connection between the two end plates 1 and the hold-down strip 2, and making the structure more compact.

When the cell group 4 expands, it will generate outward expansion pressure on the hold-down strip 2 distributed around the cell group 4, increasing the radial force on the preload member 221, and affecting the adjustment of the preload force and disassembly of the preload member 221. In the embodiments, the protrusion 11 disposed on the two end plates 1 can play a positioning effect and improve the radial limiting effect, when the cell group 4 expands and deforms, the radial force on the preload member 221 during the non-uniform deformation of the battery module 10 can be reduced, thereby minimizing the influence on the battery module 10 caused by the expansion of the cell group 4.

In some embodiments, the preload member 221 is in threaded connection with the connecting hole 2221.

By disposing the preload member 221 being in threaded connection with the connecting hole 2221, the preload member 221 can be connected to the connecting portion 222 to abut against the two end plates 1, achieving the connection between the hold-down strip 2 and the two end plates 1. Moreover, the connecting hole 2221 matches with the protrusion 11 to achieve the positioning effect, and the preload member 221 is in threaded connection with the connecting hole 2221 to facilitate the flexible adjustment of the preload force.

For example, the preload member 221 can be a fastening adjustment bolt, and the connecting hole 2221 can be a threaded hole.

In some embodiments, as illustrated in FIG. 3, the hold-down strip body 21 includes a first hold-down strip portion 211 and a second hold-down strip portion 212 independently extending in the first direction X, and the second hold-down strip portion 212 is connected to a side of the first hold-down strip portion 211. The first hold-down strip portion 211 and the second hold-down strip portion 212 abut against adjacent two sides of the cell group 4, respectively. Adjacent two sides of each of the connecting components 22 are connected to the first hold-down strip portion 211 and the second hold-down strip portion 212, respectively.

The first hold-down strip portion 211 and the second hold-down strip portion 212 press against adjacent two sides of the cell group 4, respectively, so that the first hold-down strip portion 211 and the second hold-down strip portion 212 can provide constraint effects on the cell group 4 in different directions. Moreover, the structural strength of the cell group 4 in two directions can be improved.

In some embodiments, each of the connecting components 22 includes the connecting portion 222, two sides of the connecting portion 222 are connected to the first hold-down strip portion 211 and the second hold-down strip portion 212, respectively, and any two of the connecting portion 222, the first hold-down strip portion 211, and the second hold-down strip portion 212 are perpendicular to each other.

For example, as illustrated in FIG. 3, the first hold-down strip portion 211 and the second hold-down strip portion 212 are perpendicular to each other, that is, the hold-down strip body 21 is a L-shaped structure, and the connecting portion 222 is perpendicular to the first hold-down strip portion 211 and the second hold-down strip portion 212. For the cell group 4 composed of square cells, the first hold-down strip portion 211 and the second hold-down strip portion 212 that are perpendicular to each other can improve the structural strength of the cell group 4 in two directions. Moreover, the first hold-down strip portion 211, the second hold-down strip portion 212, and the connecting portion 222 that are perpendicular to each other can play a positioning effect and a limiting effect on each of the two end plates 1 in three directions, which can improve the structural stability of the battery module 10.

In the disclosure, a width of the first hold-down strip portion 211 and a width of the second hold-down strip portion 212 may be the same or different. In practical applications, the widths and relative positions of the first hold-down strip portion 211 and the second hold-down strip portion 212 can be adjusted according to different constraint effects that needs to be provided in different directions.

In some embodiments, the battery module 10 includes at least two hold-down strips 2. For example, the number of the hold-down strips 2 is two, and the two hold-down strips 2 are disposed at two oblique diagonal corners of the cell group 4, respectively.

In the embodiments, each of the two hold-down strips 2 includes the first hold-down strip portion 211 and the second hold-down strip portion 212, which can provide the constraint effect on the cell group 4 in two different directions. Furthermore, the two hold-down strips 2 disposed at two oblique diagonal corners of the cell group 4 can provide good clamping and fixing effects on the cell group 4, so that the hold-down strips 2 and the two end plates 1 can cooperate to provide constraint effects on the cell group 4 in various directions.

It can be understood that the structural stability of the battery module 10 can be further improved by increasing the number of the hold-down strips 2, so as to provide a better constraint effect on the cell group 4. In some embodiments, the number of the hold-down strips 2 are four. For example, as illustrated in FIG. 1 and FIG. 2, four hold-down strips 2 are disposed at four corners of the cell group 4 composed of square cells, respectively. The mutual cooperation of the four hold-down strips 2 makes the cell group 4 more stable, which can significantly improve the overall stiffness of the battery module 10.

In some embodiments, as illustrated in FIG. 2, the battery module 10 further includes an adhesive layer 6, and the adhesive layer 6 is disposed between at least one of the hold-down strips 2 and the cell group 4.

At least one of the hold-down strips 2 and the cell group 4 are bonded together through the adhesive layer 6 to form a sandwich structure, so that the hold-down strips 2 and the cell group 4 form a whole. For example, as illustrated in FIG. 2, the adhesive layer 6 is disposed between each of the hold-down strips 2 in a L-shape and the cell group 4 composed of square cells. The adhesive layer 6 bonds the hold-down strips 2 and the cell group 4 together, and also makes the plurality of cells 3 in the cell group 4 form a whole, so that the hold-down strips 2 not only play a structural stability role on the battery module 10 in a height direction and a width direction, but also improve the structural stability of the battery module 10 in a length direction.

In some embodiments, as illustrated in FIG. 2, the battery module 10 further includes a foam 7, the foam 7 is disposed between every adjacent two of the cells 3, and between each of the two end plates 1 and one of the cells 3 adjacent to each of the two end plates 1. Therefore, the foam 7 can provide gap between every adjacent two of the cells 3, and between each of the two end plates 1 and one of the cells 3 adjacent to each of the two end plates 1, and the foam 7 can also improve cushioning effects between every adjacent two of the cells 3, and between each of the two end plates 1 and one of the cells 3 adjacent to each of the two end plates 1.

Alternatively, the foam 7 is disposed between every adjacent two of the cells 3. Therefore, the foam 7 can provide the gap between every adjacent two of the cells 3, and improve a cushioning effect between every adjacent two of the cells 3.

Alternatively, the foam 7 is disposed between each of the two end plates 1 and one of the cells 3 adjacent to each of the two end plates 1. Therefore, the foam 7 can provide the gap between each of the two end plates 1 and one of the cells 3 adjacent to each of the two end plates 1, and improve a cushioning effect between each of the two end plates 1 and one of the cells 3 adjacent to each of the two end plates 1.

Furthermore, the foam 7 may be a hollow structure. Alternatively, the foam 7 covers a periphery of an edge of each of the cells 3, and a gap is formed between every adjacent two of the cells 3. Alternatively, the foam 7 covers a periphery of an edge of a side of each of the two end plates 1 close to the cells 3, and a gap is formed between each of the two end plates 1 and one of the cells 3 adjacent to each of the two end plates 1. Alternatively, the foam 7 covers both of a periphery of an edge of each of the cells 3 and a periphery of an edge of a side of each of the two end plates 1 close to the cells 3, and a gap is formed between every adjacent two of the cells 3, and between each of the two end plates 1 and one of the cells 3 adjacent to each of the two end plates 1.

By setting the foam 7 being a hollow structure, on the one hand, because an area of the hollow structure is small, the adjusting pressure when adjusting the preload force can be reduced; moreover, because the foam 7 covers a periphery of an edge of each of the cells 3 and/or a periphery of an edge of each of the two end plates 1, the resistance generated in the fastening adjustment process is small. On the other hand, a cavity can be formed between each of the two end plates 1 and one of the cells 3 adjacent to each of the two end plates 1, and/or between every adjacent two of the cells 3, so that the overall heat dissipation capacity of the battery module 10 can be improved, and an expansion space can be formed between every adjacent two of the cells 3.

For example, as illustrated in FIG. 2, the cells 3 are square cells, and the foam 7 is a square frame structure corresponding to the cells 3, and the foam 7 with the square frame structure is disposed between every adjacent two of the cells 3, and between each of the two end plates 1 and one of the cells 3 adjacent to each of the two end plates 1.

As illustrated in FIG. 6, some embodiments of the disclosure provide a battery pack 100 including the battery module 10 as described above.

It should be noted that the battery pack 100 may include only one battery module 10 or a plurality of battery modules 10.

Because the battery pack 100 has excellent anti-expansion performance in various directions, and has better structural stability and reliability in the entire life cycle, the safety and reliability of the battery pack 100 using the battery module 10 can be improved.

## Claims

1. A battery module (10), **characterized in that** the battery module (10) comprises:
a plurality of cells (3) arranged sequentially in a first direction to form a cell group (4);
two end plates (1) abutting against two ends of the cell group (4), respectively; and
at least one hold-down strip (2) abutting against the cell group (4), wherein the hold-down strip (2) comprises a hold-down strip body (21) and a connecting component (22), the hold-down strip body (21) extends in the first direction, the connecting component (22) is connected to an end of the hold-down strip body (21) in the first direction, and the connecting component (22) movably abuts against a side of one of the two end plates (1) away from the cell group (4).

2. The battery module (10) of claim 1, wherein the connecting component (22) comprises a connecting portion (222) and a preload member (221), and the preload member (221) is movably connected to the connecting portion (222) in the first direction; and
the connecting portion (222) is connected to an end of the hold-down strip body (21), and an end of the preload member (221) away from the connecting portion (222) abuts against one of the two end plates (1).

3. The battery module (10) of claim 2, wherein a protrusion (11) extending in the first direction is provided on at least one of the two end plates (1), and an end of the protrusion (11) away from the two end plates (1) is inserted into the connecting portion (222).

4. The battery module (10) of claim 3, wherein the protrusion (11) is in a cylindrical shape or a cubic column shape.

5. The battery module (10) of claim 3 or 4, wherein the connecting portion (222) is provided with a connecting hole (2221), the protrusion (11) is inserted into a part of the connecting hole (2221), and the preload member (221) penetrates through another part of the connecting hole (2221) and abuts against the protrusion (11).

6. The battery module (10) of claim 5, wherein the preload member (221) is in threaded connection with the connecting hole (2221).

7. The battery module (10) of any one of claims 1 to 6, wherein the hold-down strip body (21) comprises a first hold-down strip portion (211) and a second hold-down strip portion (212) independently extending in the first direction, and the second hold-down strip portion (212) is connected to a side of the first hold-down strip portion (211); and
wherein the first hold-down strip portion (211) and the second hold-down strip portion (212) abut against adjacent two sides of the cell group (4), respectively, and adjacent two sides of the connecting component (22) are connected to the first hold-down strip portion (211) and the second hold-down strip portion (212), respectively.

8. The battery module (10) of claim 7, wherein the connecting component (22) comprises a connecting portion (222), two sides of the connecting portion (222) are connected to the first hold-down strip portion (211) and the second hold-down strip portion (212), respectively, and any two of the connecting portion (222), the first hold-down strip portion (211), and the second hold-down strip portion (212) are perpendicular to each other.

9. The battery module (10) of claim 7 or 8, wherein the battery module (10) comprises two hold-down strips (2) disposed at two oblique diagonal corners of the cell group (4), respectively.

10. The battery module (10) of any one of claims 1 to 9, further comprising an adhesive layer (6) disposed between the hold-down strip (2) and the cell group (4).

11. The battery module (10) of any one of claims 1 to 10, wherein the plurality of cells (3) are square cells (3), and the plurality of cells (3) are arranged sequentially in a thickness direction of the cells (3).

12. The battery module (10) of any one of claims 1 to 10, further comprising a foam (7);
wherein the foam (7) is disposed between every adjacent two of the plurality of cells (3);
optionally, the foam (7) is disposed between each of the two end plates (1) and one of the plurality of cells (3) adjacent to each of the two end plates (1);
optionally, the foam (7) is disposed between every adjacent two of the plurality of cells (3), and between each of the two end plates (1) and one of the plurality of cells (3) adjacent to each of the two end plates (1).

13. The battery module (10) of claim 12, wherein the foam (7) is a hollow structure;
wherein the foam (7) covers a periphery of an edge of each of the plurality of cells (3), and a gap is formed between every adjacent two of the plurality of cells (3);
optionally, the foam (7) covers a periphery of an edge of a side of each of the two end plates (1) close to the plurality of cells (3), and a gap is formed between each of the two end plates (1) and one of the plurality of cells (3) adjacent to each of the two end plates (1);
optionally, the foam (7) covers both of a periphery of an edge of each of the plurality of cells (3) and a periphery of an edge of a side of each of the two end plates (1) close to the plurality of cells (3), and a gap is formed between every adjacent two of the plurality of cells (3), and between each of the two end plates (1) and one of the plurality of cells (3) adjacent to each of the two end plates (1).

14. A battery pack (100), **characterized in that** battery pack (100) comprises the battery module (10) as claimed in any one of claims 1 to 13.
